# EUROPEAN PATENT APPLICATION

(11) **EP 2 326 096 A2**
(43) Date of publication of application: **25.05.2011**
(21) Application number: 10172309.6
(22) Date of filing: 09.08.2010
(51) Int. Cl.: H04N 13/00

(54) **3D Image Display Apparatus and Display Method**

(30) Priority: 23.11.2009 KR 20090113317
(71) Applicant: SAMSUNG ELECTRONICS CO., LTD., Suwon-si, Gyeonggi-do (KR)
(72) Inventor: Kim, Soo-hong, Gyeonggi-do (KR)
(74) Representative: Hewett, Jonathan Michael Richard

(57) **Abstract**

A 3D image display method includes separating a transmitted 3D image signal into left image frames and right image frames, sequentially storing the left image frame and the right image frame in respective frame memories, generating a left interpolation frame using motion estimation and motion compensation based on the left image frames, generating a right interpolation frame using motion estimation and motion compensation based on the right image frames, and displaying the left image frames, the right image frames, the left interpolation frame and the right interpolation frame, alternately, on a display apparatus. With this configuration, it is possible to display a high quality 3D image without additional hardware resources.

## Description

The present invention relates to a three dimensional (3D) image display apparatus and a display method, and more particularly, to a 3D image display apparatus and a display method, which are capable of generating intermediate interpolation frames using motion estimation and motion compensation and inserting the generated interpolation frames in the original image frames, so that a more natural 3D image can be displayed to a user.

One technique used to generate 3D images is a stereoscopic image method which imitates a human visual system to use two left and right two-dimensional (2D) images to express a 3D image. The principle of this method is to focus an image on the left and right eyes of an observer separately so that that image can be viewed as a 3D image due to a binocular parallax.

In order to generate a 3D image in an image display apparatus employing such a stereoscopic image method (hereinafter referred to as a "3D image display apparatus" or simply a "display apparatus"), a signal including image data corresponding to left and right images, or images generated to correspond to left and right eyes of an observer, (hereinafter referred to as a "3D image signal") is required to be transmitted to the 3D image display apparatus. Such a 3D image signal may be constructed and transmitted according to the following approaches.

The first approach is a half resolution approach in which left and right image data are arranged together in units of pixels, lines, or fields to construct one image frame for transmission. This approach allows for image signal transmission with the same bandwidth as an existing 2D image signal but may provide a resolution halved by compressing the left and right images by half.

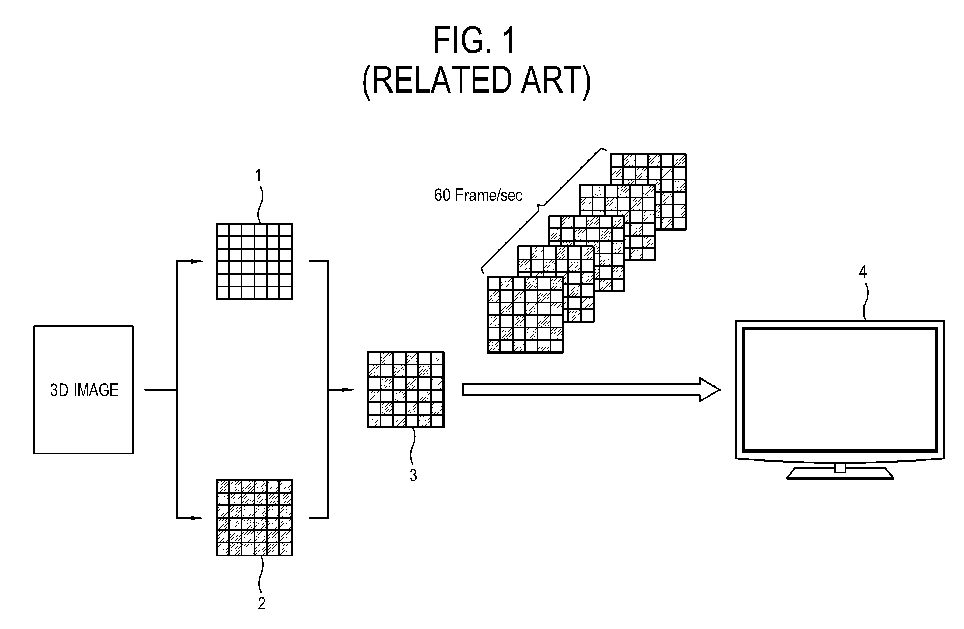

Implementation of a stereoscopic type 3D image system requires transmission of two images, one viewed by the left eye and the other viewed by the right eye. Accordingly, as shown in FIG. 1, a half resolution approach is used in which left and right image data 1 and 2 are arranged together in one frame in units of pixels, lines, or fields to construct one image frame 3 for transmission to a display apparatus 4.

This approach generates a single frame by reducing the left and right images 1 and 2 to images with a halved resolution, and grouping the pixels of the left and right images alternately in units of individual pixels or lines or combining the reduced left and right images into fields, that is, in a side-by-side format or a top-bottom format. However, in this approach, the resolution of the left and right images is partially lost, which may result in deteriorated image quality even when the images are scaled, as compared to an original image.

The second approach to generate and transmit a 3D image signal is a full resolution approach in which each of left and right images constructs one image frame for transmission. This approach doubles the amount of data to be transmitted, although no resolution is deteriorated, which results in a doubled frequency bandwidth. Further, this approach requires hardware resources of a higher level of specification for a higher resolution.

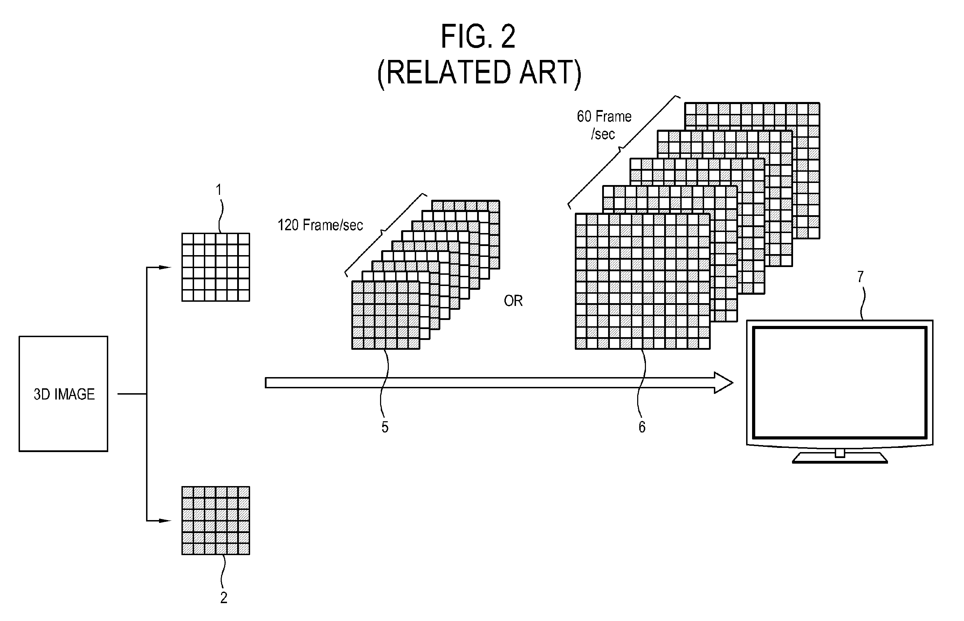

As shown in FIG. 2, a full resolution approach is used in which each of left and right images 1 and 2 forms one image frame with its original resolution for transmission to a display apparatus 7. This approach doubles the amount of data to be transmitted, although no resolution is deteriorated, which results in a doubled frequency bandwidth. Further, this approach requires hardware resources of a higher level of specification of the display apparatus 7 for a higher resolution.

As illustrated in Fig. 2, the left and right images 1 and 2 may be transmitted consecutively as indicated by the reference numeral 5 or may be combined into an image frame 6 having twice the resolution as each of the left and right image frames 1 and 2, individually.

The 3D image display apparatuses 4 and 7 separate a received 3D image into a left image and a right image according to the above-mentioned approaches, scale the left and right images to meet the resolution of the display apparatuses 4 and 7, and alternatingly display the scaled left and right images.

However, a 3D image transmitted according to the half resolution approach has a lower quality than the original image although it is scaled in the display apparatus. In addition, a 3D image transmitted according to the full resolution approach requires the increased amount of data process, thereby requiring a high level of hardware specification at both of transmission and receipt stages.

Accordingly, aspects of the present invention provide a 3D image display apparatus and a display method, which are capable of providing a high 3D image quality by using motion estimation and motion compensation without additional hardware resources.

Additional features and/or utilities of the present invention will be set forth in part in the description which follows and, in part, will be obvious from the description, or may be learned by practice of the invention.

Features and/or utilities of the present invention may be realized by a 3D image display method including separating a transmitted 3D image signal into left image frames and right image frames, sequentially storing the left image frame and the right image frame in respective frame memories, generating a left interpolation frame using motion estimation and motion compensation based on the left image frames, generating a right interpolation frame using motion estimation and motion compensation based on the right image frames, and displaying the left image frames, the right image frames, the left interpolation frame and the right interpolation frame, alternately, on a display apparatus.

The 3D image display method may further include scaling the left image frames and the right image frames to meet a resolution adaptable to the display apparatus.

The generating of the left interpolation frame may include: dividing a current left image frame stored in the frame memory into a plurality of blocks of a predetermined size, comparing the plurality of blocks with a predetermined search area set in a previous left image frame, and estimating a left image motion vector for the block of the current left image frame, and generating the left interpolation frame based on the left image motion vector.

The generating of the left interpolation frame may further include inserting the left interpolation frame between the current left image frame and the previous left image frame.

The generating of the right interpolation frame may include: dividing a current right image frame stored in the frame memory into a plurality of blocks of a predetermined size, comparing the plurality of blocks with a predetermined search area set in a previous right image frame, and estimating a right image motion vector for the block of the current right image frame, and generating the right interpolation frame based on the right image motion vector.

The generating of the right interpolation frame may further include inserting the right interpolation frame between the current right image frame and the previous right image frame.

Features and/or utilities of the present invention may also be realized by a 3D image display apparatus including a de-multiplexer unit which separates a transmitted 3D image signal into left image frames and right image frames, frame memories which sequentially store the left image frames and the right image frames, respectively, an intermediate left image generator unit which generates a left interpolation frame using motion estimation and motion compensation based on the left image frame, an intermediate right image generator unit which generates a right interpolation frame using motion estimation and motion compensation based on the right image frame, and a panel driver unit which displays the left image frames, the right image frames, the left interpolation frame and the right interpolation frame, alternately, on a display panel.

The 3D image display apparatus may further include a scaler unit which scales the left image frames and the right image frames to meet a resolution adaptable to the display panel.

The intermediate left image generator unit may include a left image motion estimator which divides a current left image frame stored in the frame memory into a plurality of blocks of a predetermined size, compares the plurality of blocks with a predetermined search area set in a previous left image frame, and estimates a left image motion vector for the block of the current left image frame, and a left image motion compensator which generates the left interpolation frame based on the left image motion vector estimated by the left image motion estimator.

The left image motion compensator may insert the left interpolation frame between the current left image frame and the previous left image frame.

The intermediate right image generator unit may include a right image motion estimator which divides a current right image frame stored in the frame memory into a plurality of blocks of a predetermined size, compares the plurality of blocks with a predetermined search area set in a previous right image frame, and estimates a right image motion vector for the block of the current right image frame, and a right image motion compensator which generates the right interpolation frame based on the right image motion vector estimated by the right image motion estimator.

The right image motion compensator may insert the right interpolation frame between the current right image frame and the previous right image frame.

Features and/or utilities of the present invention may also be realized by a 3D image display method including separating an input 3D image signal into a series of left image frames and a series of right image frames, outputting a series of left image frames with a left interpolation frame inserted in at least one of the series of left image frames, outputting a series of right image frames with a right interpolation frame inserted in at least one of the series of right image frames, and displaying the series of left image frames with the inserted left interpolation frame and the series of right image frames with the inserted right interpolation frame, alternately.

The outputting of the series of left image frames may include generating the left interpolation frame based on motion estimation using one of the left image frames and another which is previous to the one of the left image frames, and the outputting of the series of right image frames may include generating the right interpolation frame based on motion estimation using one of the right image frames and another which is previous to the one of the right image frames.

The outputting of the series of left image frames may further include inserting the left interpolation frame between the one of the left image frames and the previous left image frame, and the outputting of the series of right image frames may further include inserting the right interpolation frame between the one of the right image frames and the previous right image frame.

Features and/or utilities of the present invention may also be realized by a 3D image display apparatus including a signal receiving unit which receives a 3D image signal, a signal processing unit which separates the 3D image signal received by the signal receiving unit into a series of left image frames and a series of right image frames, and outputs a series of left image frames with a left interpolation frame inserted in at least one of the series of left image frames and a series of right image frames with a right interpolation frame inserted in at least one of the series of right image frames, and a display unit which alternately displays the series of left image frames with the inserted left interpolation frame and the series of right image frames with the inserted right interpolation frame, which are outputted by the signal processing unit.

The signal processing unit may generate the left interpolation frame based on motion estimation using one of the left image frames and another which is previous to the one of the left image frames, and generate the right interpolation frame based on motion estimation using one of the right image frames and another which is previous to the one of the right image frames.

The signal processing unit may insert the left interpolation frame between the one of the left image frames and the previous left image frame, and insert the right interpolation frame between the one of the right image frames and the previous right image frame.

According to an exemplary embodiment, the 3D image display apparatus is capable of providing a high quality 3D image without additional hardware resources. Features and/or utilities of the present invention may also be realized by a method of displaying a 3D image, the method including separating a 3D image signal including first and second image data into a first image signal and a second image signal, respectively, wherein one of the first and second image data corresponds to a left perspective view and the other of the first and second image data corresponds to a right perspective view, generating at least one first interpolation frame based on motion estimation of a first image frame of the first image signal and a second image frame before the image frame, generating at least one second interpolation frame based on motion estimation of a first image frame of the second image signal and a second image frame before the first image frame of the second image signal, and displaying a 3D image by inserting the first and second interpolation frames into the first and second image signals, respectively, and alternatingly outputting the first and second image signals.

Each frame of the 3D image signal may include first image data and second image data and separating the 3D image signal into the first image signal and the second image signal may include separating the first image data of each frame of the 3D image signal from the second image data of each frame of the 3D image signal.
A resolution of each frame of the first and second image signals is approximately half of a resolution of a 2D image signal.

The method may further include storing the each frame of the first and second image signals in memory.

Generating the first interpolation frame may include retrieving the first image frame and the second image frame of the first image signal from memory and comparing the first image frame with the second image frame, and generating the second interpolation frame may include retrieving the first image frame and the second image frame of the second image signal from memory and comparing the first image frame with the second image frame. Alternatingly outputting the first and second image signals may include consecutively outputting to a display the second image frame of the first image signal, the second image frame of the second image signal, the first interpolation frame of the first image signal, the second interpolation frame of the second image signal, the first image frame of the first image signal, and the first image frame of the second image signal.

Features and/or utilities of the present invention may also be realized by a method of generating a 3D image, the method including separating a received image signal into left and right image signals, generating left and right interpolation frames by performing a motion estimation of each of the left and right image signals, inserting the left and right interpolation frames into the left and right image signals to generate a 3D image display signal, and outputting the 3D image display signal to a 3D image display.

Features and/or utilities of the present invention may also be realized by a method of generating a 3D image, the method including generating first left and right image signals having a first image resolution, generating a transmission signal having the first image resolution by generating a plurality of image frames, each including half left image signal data and half right image signal data, separating the transmission signal into second left and right image signals, each having a resolution that is half of the first image resolution, generating left and right interpolation frames by performing a motion estimation of each of the second left and right image signals, inserting the left and right interpolation frames into the second left and right image signals to generate a 3D image display signal, and outputting the 3D image display signal to a 3D image display.

Features and/or utilities of the present invention may also be realized by a 3D image display apparatus, including a de-multiplexer unit to separate a received image signal into a left image signal and a right image signal, a signal processing unit to generate left and right interpolation frames by performing a motion estimation of each of the left and right image signals and to insert the left and right interpolation frames into the left and right image signals to generate a 3D image display signal, and a display to output the 3D image display signal by alternatingly displaying the left and right image signals including the left and right interpolation frames.

The 3D image display apparatus may further include memory to store frames of each of the left and right image signals.

The signal processing unit may generate the left interpolation frame by retrieving a first frame of the left image signal and a second frame of the left image signal before the first frame from the memory and comparing the first frame to the second frame. The signal processing unit may generate the right interpolation frame by retrieving a first frame of the right image signal and a second frame of the right image signal before the first frame from the memory and comparing the first frame to the second frame.

The signal processing unit may generate the 3D image display signal by generating a signal that alternatingly may include a frame of the left image signal and a frame of the right image signal.

Features and/or utilities of the present invention may also be realized by a 3D image display system, including a 3D image capture device to generate first left and right image signals having a first image resolution, a signal transmission device to transmit a transmission signal having the first image resolution by generating a plurality of image frames, each including half left image signal data and half right image signal data, a receiver to separate the transmission signal into second left and right image signals, each having a resolution that is half of the first image resolution, and a signal processing unit to generate left and right interpolation frames by performing a motion estimation of each of the second left and right image signals and to insert the left and right interpolation frames into the left and right image signals to generate a 3D image display signal.

The above and/or other features of the present invention will become apparent and more readily appreciated from the following description of the exemplary embodiments, taken in conjunction with the accompanying drawings, in which:
FIG. 1 illustrates one image frame that is constructed by arranging left and right image data by units of pixels in one frame;
FIG. 2 illustrates one image frame that is constructed for each of left and right images while maintaining the original resolution of the left and right images;
FIG. 3 illustrates a 3D image display apparatus according to one exemplary embodiment of the present invention;
FIG. 4 is a view showing a configuration of a signal processing unit and a display unit of the 3D image display apparatus shown in FIG. 3;
FIG. 5 is a view showing a sequence of 3D image frame display according to one exemplary embodiment of the present invention;
FIG. 6 is a flow chart showing an operation of the 3D image display apparatus shown in FIG. 3; and
FIG. 7 illustrates a 3D display system according to an embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

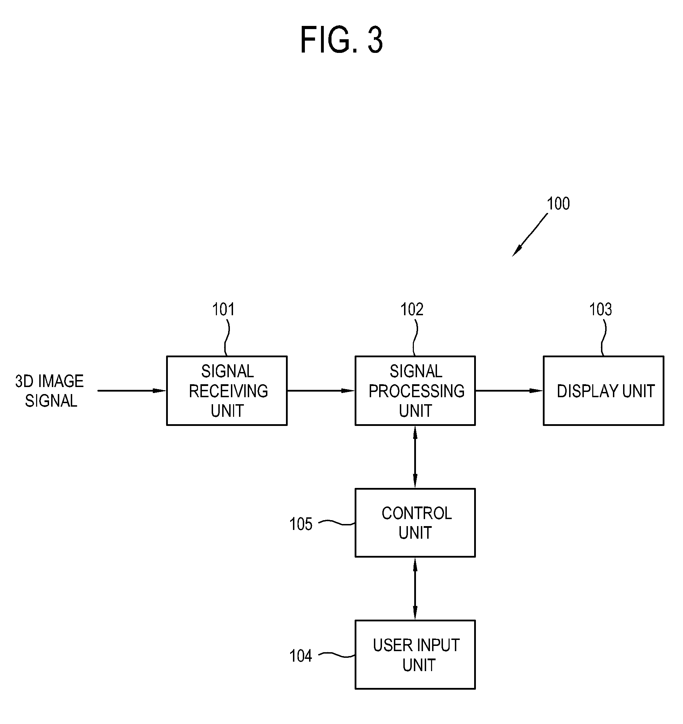

FIG. 3 illustrates a configuration of a 3D image display apparatus according to one exemplary embodiment of the present invention. A 3D image display apparatus 100, which may be implemented by a TV or the like, receives and processes a 3D image signal and displays a 3D image based on the processes 3D image signal. As shown in FIG. 3, the display apparatus 100 includes a signal receiving unit 101, a signal processing unit 102, a display unit 103, a user input unit 104 and a control unit 105.

The signal receiving unit 101 receives a 3D image signal from the outside, or from a device or transmitter external to the receiving unit 101. The 3D image signal received by the signal receiving unit 101 includes a broadcasting signal such as a DTV signal, a cable broadcasting signal or the like. In this case, the signal receiving unit 101 may tune and receive a broadcasting signal of a channel selected by a user under control the control unit 105. In addition, the 3D image signal received by the signal receiving unit 101 may include a signal output from an image display apparatus (not shown) such as a digital versatile disc (DVD) player, a blue-ray disc (BD) player, a personal computer 9(PC) or the like. Further, although not shown, the signal receiving unit 101 may receive a voice signal for voice output, a data signal for data information output, etc. In this embodiment, the image signal, the voice signal and the data signal may be received together as a single signal.

The signal processing unit 102 performs signal processing of the 3D image signal received by the signal receiving unit 101 so that a 3D image can be displayed on the display unit 103. The signal processing performed by the signal processing unit 102 may include decoding, image enhancing, scaling and so on in addition to the 3D image processing. The 3D image processing of the signal processing unit according to one exemplary embodiment of the present invention will be described in more detail below. The signal processing unit 102 may further performs processing of the voice signal and the data signal received through the signal receiving unit 101. The display apparatus 100 may further include a voice output unit (not shown) such as a speaker which outputs voice based on the voice signal processed by the signal processing unit 102.

The display unit 103 displays an image based on the image signal processed by the signal processing unit 102. The display unit 103 may display the image according to, for example, an LCD, a PDP scheme, an OLED scheme or the like.

The user input unit 104 receives an input from a user and may be implemented by, for example, a remote controller, an operation panel or the like. The user input received by the user input unit 104 is delivered to the control unit 105.

The control unit 105 controls the entire operation of other component of the display apparatus 100 and may include a firmware as a control program, a CPU which executes the firmware, and a RAM.

Although not shown, the display apparatus 100 may further include a power supply unit which supplies operation power to each of the above components such as the display unit 103 and so on, a communication unit to communicate via a network such as the Internet, a local area network, or any other type of network, a storage unit such as a flash memory, a hard disk drive or other memory to store multimedia contents such as video, etc.

Although the 3D image display apparatus 100 is illustrated with the TV in this embodiment, the 3D image display apparatus of the present invention is not limited thereto but may be implemented by various forms of apparatuses including a monitor, a laptop computer, a mobile terminal, a projector, and so on.

The 3D image display apparatus 100 of the present invention may display a 3D image by separating a received 3D image signal into a left image frame and a right image frame, generating an interpolation frame for each of the left and right image frames, and inserting the generated interpolation frames in an original image frame. In addition, the 3D image display apparatus 100 of the present invention may use motion estimation and motion compensation to generate the interpolation frames.

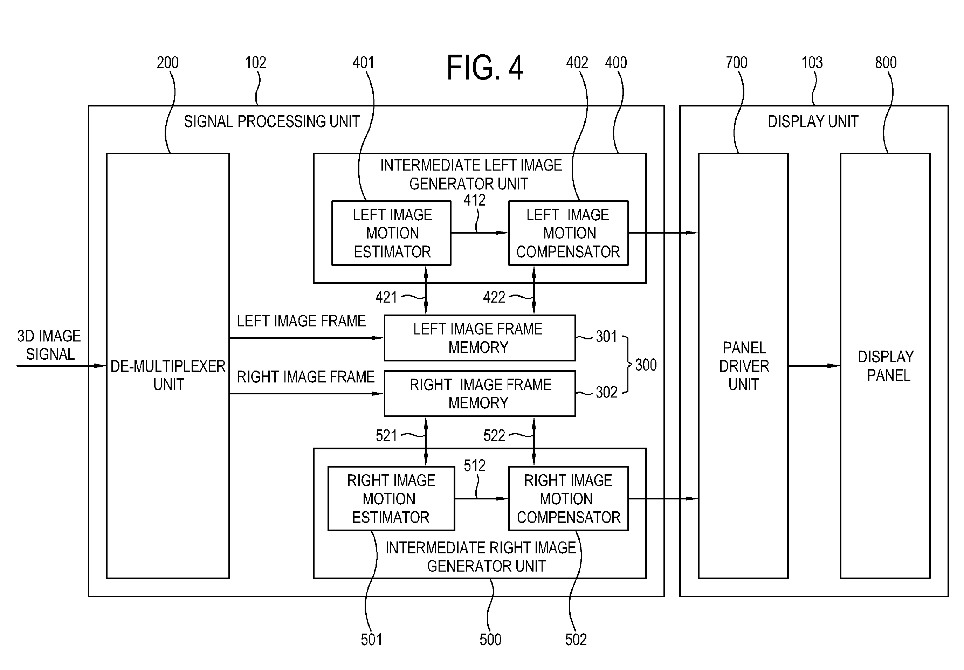

As shown in FIG. 4, the signal processing unit 102 of the 3D image display apparatus 100 may include a de-multiplexer unit 200, a frame memory unit 300, an intermediate left image generator unit 400 and an intermediate right image generator unit 500, and the display unit 103 may include a display panel 800 and a panel driver unit 700.

The de-multiplexer unit 200 separates the 3D image signal into the left image frame and the right image frame. For example, if the frame of the 3D image signal is formed by arranging left and right image data together in alternating pixels, the de-multiplexer unit 200 separates odd-numbered pixels and even-numbered pixels into the left image frame (or right image frame) and the right image frame (or left image frame), respectively.

In another exemplary embodiment, a frame of the 3D image signal may be formed by arranging left and right image data together in separate lines of the frame. In the line-by-line format, the de-multiplexer unit 200 separates odd-numbered vertical lines (or horizontal lines) and even-numbered vertical lines (or horizontal lines) into the left image frame (or right image frame) and the right image frame (or left image frame), respectively.

In still another exemplary embodiment, the 3D image signal may include an image frame that is formed by arranging left and right image data together in separate fields. In a top-bottom format, the de-multiplexer unit 200 separates top portions and bottom portions in a horizontal direction of a frame into the left image frame (or right image frame) and the right image frame (or left image frame), respectively. On the other hand, in a side-by-side format, the de-multiplexer 200 separates left portions and right portions in a vertical direction of the frame into the left image frame (or right image frame) and the right image frame (or left image frame), respectively.

The frame memory unit 300 includes a left frame memory 301 and a right frame memory 302 in which the left image frame and the right image frame obtained in the de-multiplexer unit 200 are sequentially stored, respectively. Although it is illustrated in FIG. 4 that the left image frame memory 301 and the right image frame memory 302 are separate memories, the present invention is not limited thereto, but the left image frame memory 301 and the right image frame memory 302 may be implemented as separate memory areas assigned within a single frame memory unit 300.

The intermediate left image generator unit 400 generates a left interpolation frame through motion estimation and motion compensation based on the left image frame.

The intermediate left image generator unit 400 may include a left image motion estimator 401 and a left image motion compensator 402.

The left image motion estimator 401 performs motion estimation using a currently input left image frame and a previous left image frame 421 stored in the left image frame memory 301. The left image motion estimator 401 may receive the current left image frame from the de-multiplexer unit 200 either directly or via the left image frame memory 301.

The left image motion estimator 401 may perform the motion estimation in units of blocks of a predetermined size. For example, the left image motion estimator 401 may divide the current left image frame into a plurality of blocks of a predetermined size, may compare the plurality of blocks with a predetermined search area set in the previous left image frame, and may estimate a left image motion vector for a current left image frame block. In one exemplary embodiment, an example of a motion vector estimation method may include a block matching algorithm (BMA) based on the sum of absolute difference (SAD).

The left image motion compensator 402 generates a motion-compensated left interpolation frame using a left image motion vector 412 input from the left image motion estimator 401.

The left image motion compensator 402 generates an estimated frame, i.e., a left interpolation frame, based on the left image motion vector 412, a previous left image frame 422 stored in the left image frame memory 301, and the current left image frame, and inserts the generated left interpolation frame between the current left image frame and the previous left image frame. That is, the left image motion compensator 402 outputs the previous left image frame, the left interpolation frame and the current left image frame to the panel driver 700 according to a given frame rate. The left image motion compensator 402 may receive the current left image frame from the de-multiplexer unit 200 either directly or via the left image motion estimator 401 or the left image frame memory 301.

The intermediate right image generator unit 500 generates a right interpolation frame through motion estimation and motion compensation based on the right image frame.

The intermediate right image generator unit 500 may include a right image motion estimator 501 and a right image motion compensator 502.

The right image motion estimator 501 performs motion estimation using a currently input right image frame and a previous right image frame 521 stored in the right image frame memory 302. The right image motion estimator 501 may receive the current right image frame from the de-multiplexer unit 200 either directly or via the right image frame memory 302.

The right image motion estimator 501 may perform the motion estimation in units of blocks of a predetermined size. For example, the right image motion estimator 501 may divide the current right image frame into a plurality of blocks of a predetermined size, may compare the plurality of blocks with a predetermined search area set in the previous right image frame, and may estimate a right image motion vector for a current right image frame block. In one exemplary embodiment, an example of a motion vector estimation method may include a block matching algorithm (BMA) based on the sum of absolute difference (SAD).

The right image motion compensator 502 generates a motion-compensated right interpolation frame using a right image motion vector 512 input from the right image motion estimator 501.

The right image motion compensator 502 generates an estimated frame, i.e., a right interpolation frame, based on the right image motion vector 512, a previous right image frame 522 stored in the right image frame memory 302, and the current right image frame, and inserts the generated right interpolation frame between the current right image frame and the previous right image frame. That is, the right image motion compensator 502 outputs the previous right image frame, the right interpolation frame and the current right image frame to the panel driver 700 according to a given frame rate.

The display panel 800 may include a display device such as, for example, an LCD, PDP, OLED or the like. The panel driver unit 700 displays a series of left image frames including the left interpolation frame input successively from the left image motion compensator 402 and a series of right image frames including the right interpolation frame input successively from the right image motion compensator 502, alternately, on the display panel 800 in a horizontal direction.

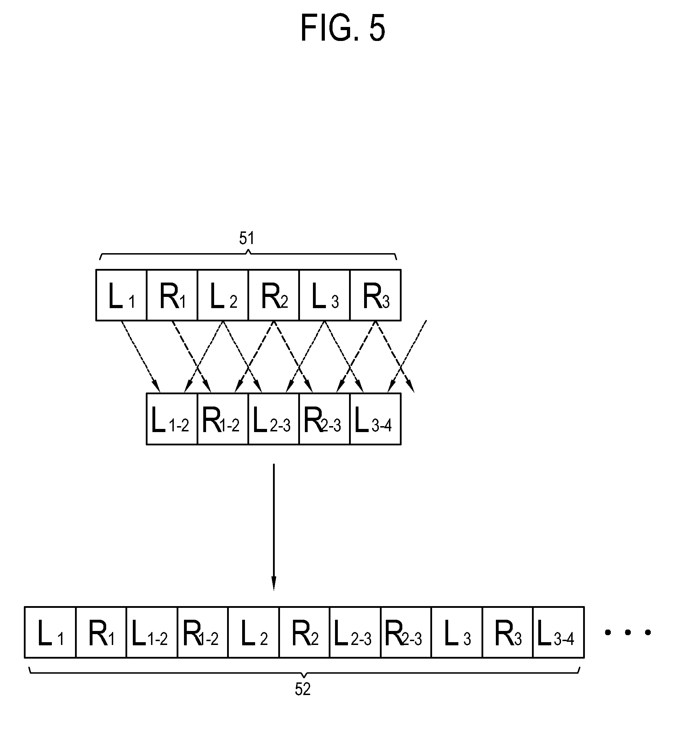

Hereinafter, the 3D image process of the signal processing unit 102 according to one exemplary embodiment of the present invention will be additionally described with reference to FIG. 5. If left image frames and right image frames 51 are input in a sequence of L₁, R₁, L₂, R₂, L₃, R₃, ..., the left image frames L₁, L₂, L₃, ... are stored in the left image frame memory 301 shown in FIG. 4, and the left image frames R₁, R₂, R₃, ... are stored in the right image frame memory 302. The intermediate left image generator unit 400 generates a left interpolation frame L₁₋₂ based on the current left image frame L₁ and previous left image frame L₂, which were described with reference to FIG. 4. Likewise, the intermediate right image generator unit 500 generates a right interpolation frame R₁₋₂ based on R₁ and R₂.

The panel driver 700 displays a series of left image frames and a series of right image frames input from the signal processing unit 102, alternately, on the display panel 800 for 3D image display. In one exemplary embodiment, a sequence of image frames displayed on the display panel 800 may be L₁, R₁, L₁₋₂, R₁₋₂, L₂, R₂, L₂₋₃, R₂₋₃, L₃, R₃, ... as shown by 52 in FIG. 5.

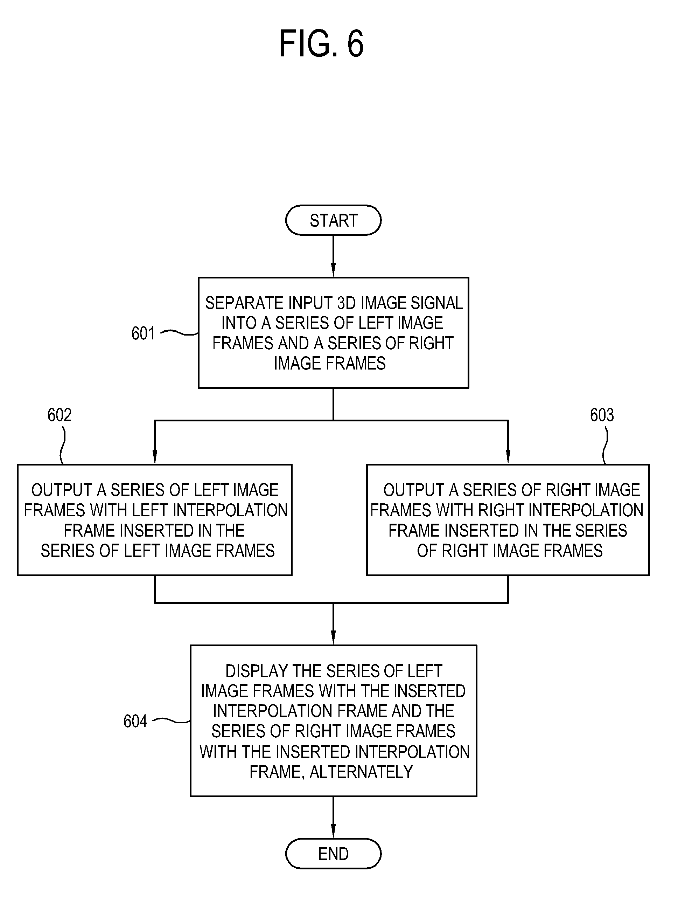

Hereinafter, an operation of the 3D image display apparatus 100 according to one exemplary embodiment of the present invention will be described with reference to FIG. 6. First, in operation 601, the signal processing unit 102 of the display apparatus 100 separates an input 3D image signal into a series of left image frames and a series of right image frames. Next, in operation 602, the signal processing unit 102 outputs the series of left image frames, with a left interpolation frame inserted in at least one of the series of left image frames, to the panel driver unit 700. In the operation 602, for example, the signal processing unit 102 may generate the left interpolation frame for a current left image frame of the series of left image frames based on motion estimation using a previous left image frame, and output the series of left image frames, with the generated left interpolation frame inserted between the previous left image frame and the current left image frame.

In operation 603, the signal processing unit 102 outputs the series of right image frames, with a right interpolation frame inserted in at least one of the series of right image frames, to the panel driver unit 700. In the operation 603, for example, the signal processing unit 102 may generate the right interpolation frame for a current right image frame of the series of right image frames based on motion estimation using a previous right image frame, and output the series of right image frames, with the generated right interpolation frame inserted between the previous right image frame and the current right image frame.

In operation 604, the panel driver unit 700 displays the series of left image frames and the series of right image frames, with the left interpolation frame and the right interpolation frame inserted respectively in the series of left image frames and the series of right image frames, alternately, to the display panel 800 in the horizontal direction.

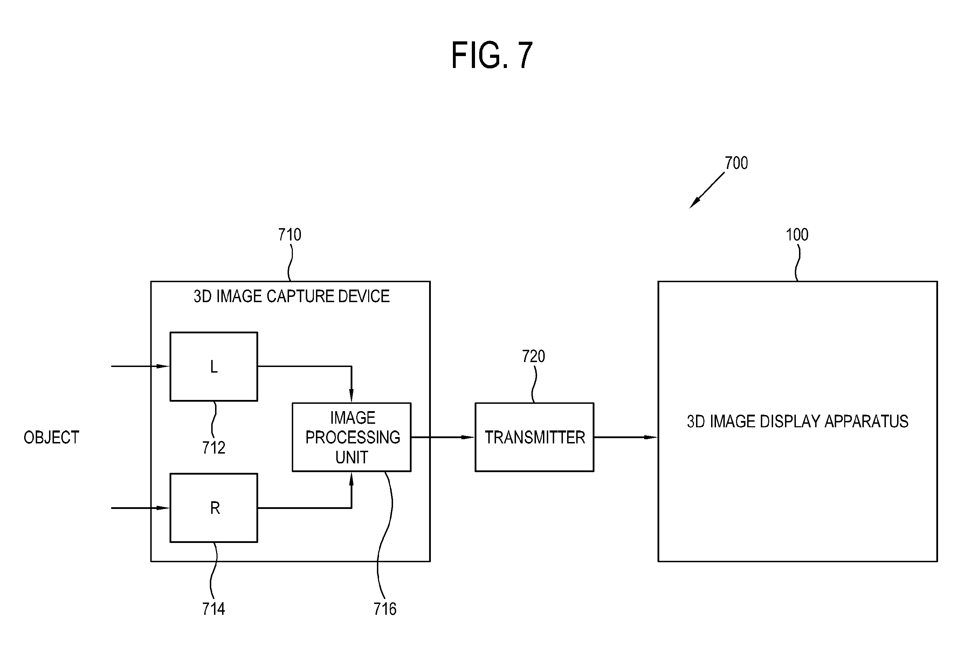

FIG. 7 illustrates an example of a 3D display system 700 according to the present invention. The system 700 includes a 3D image capture device 710, a transmitter 720, and a 3D image display apparatus 100 similar to the apparatus 100 described above with respect to FIGS. 3-6.

The 3D image capture device 710 may include left and right image capture units 712 and 714. The units 712 and 714 may be cameras to capture an image of a physical object, or processing units and/or memory to generate and/or store an image of a virtual object from left and right perspectives corresponding to a left and right eye of a viewer. The 3D image capture device 710 may further include an image processing unit 716 to combine the left and right image signals output from the left and right image capture devices 712 and 714 into a 3D image signal. The image processing unit 716 may combine the left and right image signals as described above with respect to FIGS. 1 and 2, for example.

The image processing unit 716 may output the 3D image signal to a transmitter 720, such as a modem, server, wireless device or antenna, or any other transmitter to transmit the 3D image signal to the 3D image display apparatus 100. Operation of the 3D image display apparatus 100 is described above with respect to FIGS. 3-6, and the description will not be repeated here.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

Although a few exemplary embodiments of the present invention have been shown and described, it will be appreciated by those skilled in the art that changes may be made in these exemplary embodiments without departing from the principles of the invention, the scope of which is defined in the appended claims.

## Claims

1. A 3D image display method comprising:
separating a transmitted 3D image signal into left image frames and right image frames;
sequentially storing the left image frames and the right image frames in respective frame memories;
generating a left interpolation frame using motion estimation and motion compensation based on the left image frames;
generating a right interpolation frame using motion estimation and motion compensation based on the right image frames; and
displaying the left image frames, the right image frames, the left interpolation frame and the right interpolation frame, alternately, on a display apparatus.

2. The 3D image display method according to claim 1, further comprising scaling the left image frames and the right image frames to meet a resolution adaptable to the display apparatus.

3. The 3D image display method according to claim 1, wherein the generating of the left interpolation frame comprises:
dividing a current left image frame stored in the frame memory into a plurality of blocks of a predetermined size, comparing the plurality of blocks with a predetermined search area set in a previous left image frame, and estimating a left image motion vector for the block of the current left image frame; and
generating the left interpolation frame based on the left image motion vector.

4. The 3D image display method according to claim 3, wherein the generating of the left interpolation frame further comprises inserting the left interpolation frame between the current left image frame and the previous left image frame.

5. The 3D image display method according to claim 1, wherein the generating of the right interpolation frame comprises:
dividing a current right image frame stored in the frame memory into a plurality of blocks of a predetermined size, comparing the plurality of blocks with a predetermined search area set in a previous right image frame, and estimating a right image motion vector for the block of the current right image frame; and
generating the right interpolation frame based on the right image motion vector.

6. The 3D image display method according to claim 5, wherein the generating of the right interpolation frame further comprises inserting the right interpolation frame between the current right image frame and the previous right image frame.

7. A 3D image display apparatus comprising:
a de-multiplexer unit to separate a transmitted 3D image signal into left image frames and right image frames;
at least one frame memory to sequentially store the left image frames and the right image frames, respectively;
an intermediate left image generator unit to generate a left interpolation frame using motion estimation and motion compensation based on the left image frame;
an intermediate right image generator unit to generate a right interpolation frame using motion estimation and motion compensation based on the right image frame; and
a panel driver unit to display the left image frames, the right image frames, the left interpolation frame and the right interpolation frame, alternately, on a display panel.

8. The 3D image display apparatus according to claim 7, further comprising a scaler unit to scale the left image frames and the right image frames to meet a resolution adaptable to the display panel.

9. The 3D image display apparatus according to claim 7, wherein the intermediate left image generator unit comprises:
a left image motion estimator to divide a current left image frame stored in the frame memory into a plurality of blocks of a predetermined size, to compare the plurality of blocks with a predetermined search area set in a previous left image frame, and to estimate a left image motion vector for the block of the current left image frame; and
a left image motion compensator to generate the left interpolation frame based on the left image motion vector estimated by the left image motion estimator.

10. The 3D image display apparatus according to claim 9, wherein the left image motion compensator inserts the left interpolation frame between the current left image frame and the previous left image frame.

11. The 3D image display apparatus according to claim 7, wherein the intermediate right image generator unit comprises:
a right image motion estimator to divide a current right image frame stored in the frame memory into a plurality of blocks of a predetermined size, to compare the plurality of blocks with a predetermined search area set in a previous right image frame, and to estimate a right image motion vector for the block of the current right image frame; and
a right image motion compensator to generate the right interpolation frame based on the right image motion vector estimated by the right image motion estimator.

12. The 3D image display apparatus according to claim 11, wherein the right image motion compensator inserts the right interpolation frame between the current right image frame and the previous right image frame.

13. A 3D image display method comprising:
separating an input 3D image signal into a series of left image frames and a series of right image frames;
outputting a series of left image frames with a left interpolation frame inserted in at least one of the series of left image frames;
outputting a series of right image frames with a right interpolation frame inserted in at least one of the series of right image frames; and
alternately displaying the series of left image frames with the inserted left interpolation frame and the series of right image frames with the inserted right interpolation frame.

14. The 3D image display method according to claim 13, wherein the outputting of the series of left image frames comprises generating the left interpolation frame based on motion estimation using one of the left image frames and another which is previous to the one of the left image frames, and wherein the outputting of the series of right image frames comprises generating the right interpolation frame based on motion estimation using one of the right image frames and another which is previous to the one of the right image frames.

15. A 3D image display apparatus comprising:
a signal receiving unit to receive a 3D image signal;
a signal processing unit to separate the 3D image signal received by the signal receiving unit into a series of left image frames and a series of right image frames, and to output a series of left image frames with a left interpolation frame inserted in at least one of the series of left image frames and a series of right image frames with a right interpolation frame inserted in at least one of the series of right image frames; and
a display unit to alternately display the series of left image frames with the inserted left interpolation frame and the series of right image frames with the inserted right interpolation frame, which are outputted by the signal processing unit.
